# FASCICULE DE BREVET EUROPEEN

(11) **EP 4 188 795 B1**
(45) Date de publication et mention de la délivrance du brevet: **10.09.2025**
(21) Numéro de dépôt: 21746064.1
(22) Date de dépôt: 23.07.2021
(51) Int. Cl.: B64C 1/14

(54) **DISPOSITIF D'OUVERTURE D'URGENCE D'UNE PORTE D'AERONEF À ORGANE DE RETENUE PERIPHERIQUE**
VORRICHTUNG ZUR NOTÖFFNUNG EINER FLUGZEUGTÜR MIT UMFANGSHALTEELEMENT
DEVICE FOR EMERGENCY OPENING OF AN AIRCRAFT DOOR WITH PERIPHERAL RETAINING MEMBER

(30) Priorité: 30.07.2020 FR 2008083
(43) Date de publication de la demande: 07.06.2023
(73) Titulaire: Latecoere, 31500 Toulouse (FR)
(72) Inventeur: DEVILLEZ, Sébastien, 31240 SAINT JEAN OCCITANIE (FR); REIDT, Christian, 31140 SAINT LOUP CAMMAS (FR)
(74) Mandataire: Junca, Eric
(86) Numéro de dépôt international: PCT/EP2021/070697
(87) Numéro de publication internationale: WO 2022/023212

(56) Documents cités:
- WO-A1-2020/020861
- FR-A1- 2 814 771

## Description

### DOMAINE TECHNIQUE

L'invention concerne le domaine de l'aéronautique et concerne plus particulièrement un dispositif d'ouverture d'urgence d'une porte d'aéronef.

Les portes d'aéronefs peuvent être ouvertes pour permettre l'accès à la cabine ou aux soutes, ou pour permettre l'évacuation en cas d'urgence. En cas d'évacuation d'urgence des passagers, les portes d'aéronefs, qu'elles soient des portes de passager ou des portes d'évacuation d'urgence, comportent usuellement un dispositif d'ouverture d'urgence qui, s'il est activé, provoque une ouverture rapide et sans effort significatif, quelle que soit la position possible de l'aéronef au moment de l'évacuation. Il est impératif que le déclenchement du dispositif d'ouverture d'urgence ne demande que peu d'efforts.

### ART ANTÉRIEUR

À l'heure actuelle, tel que notamment décrit dans la demande de brevet FR2830564, les moyens d'actionnement consistent classiquement en un actionneur de type pneumatique alimenté au moyen d'une réserve annexe de fluide moteur. De tels moyens d'actionnement présentent toutefois plusieurs inconvénients. En effet, ils présentent un poids et un encombrement relativement importants, en raison notamment de la présence de la réserve annexe de fluide moteur. De plus, ils imposent d'effectuer un contrôle périodique de la pression du fluide moteur, et de maintenir voire remplacer périodiquement la réserve annexe même en l'absence d'utilisation de cette dernière. Enfin, après activation du dispositif d'ouverture d'urgence, ces moyens d'actionnement imposent, en vue d'être à nouveau opérationnels, une remise en condition de la réserve annexe de fluide moteur.

Une autre solution actuelle décrite notamment dans la demande de brevet FR2864021 permet de diminuer l'encombrement et le poids des moyens d'actionnement. En effet, selon cette solution, les moyens d'actionnement consistent en un vérin pyrotechnique, c'est-à-dire un vérin autonome n'exigeant pas de source d'alimentation en fluide moteur. Par contre, de tels vérins pyrotechniques nécessitent d'être périodiquement inspectés et remplacés même en l'absence d'utilisation. Ces vérins pyrotechniques doivent, en outre, être également remis en condition après activation du dispositif d'ouverture d'urgence. Ce qui pose évidemment le problème du transport et du stockage d'éléments explosifs.

La demande de brevet FR2975967 décrit un dispositif d'ouverture d'urgence d'aéronef qui pallie les inconvénients décrits ci-dessus. Ce dispositif d'ouverture d'urgence consiste en des moyens d'actionnement de conception mécanique permettant de se passer d'éléments pneumatiques ou pyrotechniques. Le poids et l'encombrement du dispositif d'ouverture d'urgence sont ainsi réduits, la fiabilité est augmentée, et ce dispositif requiert peu ou pas de maintenance. Cependant, le dispositif d'ouverture d'urgence décrit reste complexe et encombrant. De plus, l'adjonction de moyens de contrôle du dispositif d'ouverture d'urgence augmente l'encombrement général du dispositif.

Le document WO2020/020861 décrit également un dispositif d'ouverture d'urgence d'aéronef dont le fonctionnement et la commande sont entièrement mécaniques, cette commande nécessitant peu d'effort de la part de l'utilisateur. Cependant ce dispositif d'ouverture est limité dans son utilisation car il ne permet pas de contrôler le mouvement de la porte.

### EXPOSÉ DE L'INVENTION

Le but de l'invention est d'améliorer les dispositifs d'ouverture d'urgence de l'art antérieur.

À cet effet, l'invention vise un dispositif d'ouverture d'urgence d'une porte d'aéronef, comprenant :
- un organe d'actionnement tubulaire s'étendant selon une direction axiale, doté d'une première extrémité de liaison et d'une deuxième extrémité de liaison, cet organe d'actionnement tubulaire étant commutable entre une position rétractée de repos et une position déployée d'ouverture ;
- des moyens élastiques de compression adaptés à solliciter l'organe d'actionnement tubulaire de sa position rétractée vers sa position déployée ;
- un organe de retenue de l'organe d'actionnement tubulaire dans sa position rétractée avec les moyens élastiques de compression maintenus comprimés ;
- des moyens de déclenchement adaptés à libérer l'organe de retenue et provoquer le passage de l'organe d'actionnement tubulaire à sa position déployée sous l'effet de l'expansion des moyens élastiques de compression.

Dans ce dispositif d'ouverture d'urgence :
- l'organe d'actionnement tubulaire comporte une première platine d'extrémité, située du côté de la première extrémité de liaison, et une deuxième platine d'extrémité, située du côté de la deuxième extrémité de liaison ;
- les moyens élastiques de compression comportent un ressort tubulaire comprimé entre la première platine d'extrémité et la deuxième platine d'extrémité ;
- un régulateur d'expansion est disposé à l'intérieur du ressort tubulaire ;
- l'organe de retenue comporte au moins une attache périphérique reliant la première platine d'extrémité à la deuxième platine d'extrémité, cette attache périphérique étant radialement externe au ressort tubulaire.

Un tel dispositif d'ouverture d'urgence présente tous les avantages d'un dispositif mécanique tel que décrit dans le document FR2975967. Les moyens d'actionnement présentent un poids et un encombrement réduit. La conception mécanique des moyens d'actionnement ne requiert pas de maintenance particulière en l'absence d'utilisation du dispositif d'ouverture. Aucun fluide moteur n'est nécessaire pour activer les moyens d'actionnement.

L'invention vise par ailleurs un agencement extrêmement compact du dispositif d'ouverture d'urgence qui inclut à la fois l'ensemble des éléments mécaniques produisant le mouvement d'ouverture, les éléments de déclenchement, et les éléments permettant le contrôle de l'ouverture.

Le dispositif d'ouverture d'urgence peut ainsi être dimensionné pour fournir une importante force d'ouverture qui conduit à une ouverture rapide de la porte d'aéronef, en comptant par exemple sur un amortissement du mouvement de la porte le long de la course d'ouverture grâce au régulateur d'expansion qui est intégré au sein du dispositif d'ouverture d'urgence, ou en contrôlant l'ouverture et la fermeture de la porte alors que l'organe d'actionnement tubulaire est en position rétractée.

Les éléments de déclenchement peuvent de plus être également entièrement mécaniques, ce qui conduit à un dispositif d'ouverture d'urgence entièrement mécanique et qui ne requiert aucun branchement à une source d'énergie externe ni à une commande déportée. Un tel dispositif forme un produit fini de type vérin mécanique autonome, ce qui est un gage de fiabilité et de sureté de fonctionnement appréciables dans le domaine de l'aéronautique et plus particulièrement des dispositifs d'ouverture d'urgence.

Dans le dispositif d'ouverture d'urgence selon l'invention, la retenue de l'organe d'actionnement ne repose sur aucun mécanisme mobile dont les pièces nécessiteraient des moyens complexes pour rester mobile sous charge (roulements, bagues, etc.) et seraient soumise à de l'usure par friction, matage, et autres inconvénients relatifs aux pièces mécaniques mobiles maintenues sous fortes charges.

L'invention permet une simplification drastique des dispositifs d'ouverture d'urgence de l'art antérieur en supprimant de nombreuses pièces mécaniques ce qui rend le dispositif plus léger, plus compact et plus fiable, en plus d'abaisser son cout.

Le dispositif d'ouverture d'urgence selon l'invention peut comporter les caractéristiques additionnelles suivantes, seules ou en combinaison :
- l'organe de retenue comporte une pluralité d'attaches périphériques radialement externes au ressort tubulaire, chacune de ces attaches périphériques comportant une tige de rétention ;
- chacune des tiges de rétention : s'étend entre une ouverture pratiquée dans la première platine d'extrémité et une ouverture pratiquée dans la deuxième platine d'extrémité ; et comporte à l'une de ses extrémités une tête fixe, les moyens de déclenchement comportant une tête débrayable à l'autre extrémité de la tige de rétention ;
- l'attache périphérique comporte un fil de retenue ;
- le fil de retenue chemine selon au moins un aller-retour entre la première platine d'extrémité et la deuxième platine d'extrémité ;
- les moyens de déclenchement comportent une tête débrayable fixant une extrémité du fil de retenue par rapport à un orifice de l'une des platines d'extrémité ;
- les moyens de déclenchement comportent un organe de sectionnement transversal du fil de retenue ;
- la première platine d'extrémité comporte un cylindre interne de guidage s'étendant suivant la direction axiale et la deuxième platine d'extrémité comporte un cylindre externe de guidage s'étendant dans la direction axiale, le cylindre interne de guidage et le cylindre externe de guidage étant concentriques et emboités l'un dans l'autre selon une liaison glissière ;
- le régulateur d'expansion comporte une chambre de vérin délimitée par le cylindre interne de guidage ;
- le régulateur d'expansion comporte un piston mobile dans la chambre de vérin, selon la direction axiale ;
- le piston est relié par une bielle à la deuxième extrémité de liaison, la bielle traversant : une paroi de fond du cylindre interne de guidage ; et la deuxième platine d'extrémité ;
- la bielle comporte une butée d'entrainement de la bielle par la deuxième platine d'extrémité ;
- la butée est disposée sur portion de la bielle qui est située entre la deuxième platine d'extrémité et la deuxième extrémité de liaison.

Le dispositif selon l'invention peut comporter des moyens élastiques à tarage important, c'est-à-dire destinés à exercer une force d'ouverture importante sur le mécanisme d'ouverture de la porte, ce qui est nécessaire dans cette application d'ouverture d'urgence de porte. Malgré le tarage important des éléments élastiques, l'activation des moyens d'actionnement se fait sans efforts. Dans son mode de réalisation avec fil de retenue, le fil de retenue permet un important découplage entre la force permettant de maintenir le tarage des moyens élastiques, et la force nécessaire au déclenchement du dispositif. Même avec des moyens élastiques de fort tarage impliquant une forte tension du fil, son sectionnement transversal nécessitera une force minime. Le ratio effort de retenue/effort de déclenchement est très favorable et l'invention permet une augmentation du tarage des moyens élastiques tout en diminuant l'effort de déclenchement.

### PRÉSENTATION DES FIGURES

D'autres caractéristiques et avantages de l'invention ressortiront de la description non limitative qui suit, en référence aux dessins annexés dans lesquels :
- [Fig.1] La figure 1 est une vue schématique en coupe d'un dispositif d'ouverture d'urgence selon un premier mode de réalisation de l'invention ;
- [Fig.2] La figure 2 est une vue schématique en coupe d'un dispositif d'urgence selon un deuxième mode de réalisation de l'invention ;
- [Fig.3] La figure 3 est une vue schématique en coupe d'un dispositif d'ouverture d'urgence selon un troisième mode de réalisation de l'invention ;
- [Fig.4] La figure 4 représente le couteau de sectionnement du dispositif de la figure 3 ;
- [Fig.5] La figure 5 représente un dispositif d'ouverture d'urgence dans une position intermédiaire d'ouverture.

### DESCRIPTION DÉTAILLÉE

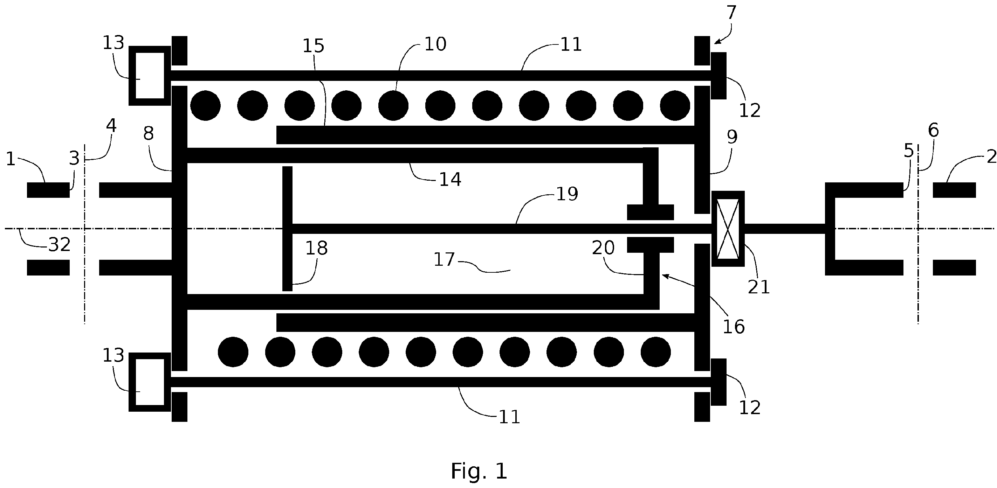

La figure 1 illustre un premier mode de réalisation de l'invention. Cette figure 1 est un schéma de principe représentant schématiquement les éléments principaux d'un dispositif d'ouverture d'urgence de porte d'aéronef selon une coupe longitudinale.

Le dispositif d'ouverture d'urgence est un élément compact se présentant sous la forme d'un vérin qui comporte une première extrémité de liaison 1 et une deuxième extrémité de liaison 2.

Le dispositif d'ouverture d'urgence est prévu pour un montage dans une porte d'aéronef, de sorte qu'un mouvement d'écartement des deux extrémités de liaison 1,2 provoque l'ouverture de la porte d'aéronef. À titre d'exemple, le dispositif d'ouverture d'urgence peut être monté de sorte que la première extrémité de liaison 1 et la deuxième extrémité de liaison 2 soient reliées à des éléments de la porte permettant son ouverture par expansion. Selon un autre exemple, les deux extrémités de liaison peuvent être fixées au sein même du mécanisme d'ouverture de la porte, entre deux leviers dont l'écartement provoque l'ouverture de la porte d'aéronef.

La première extrémité de liaison 1 comporte un pivot 3 permettant une liaison pivot d'axe 4 avec la porte d'aéronef. De même, la deuxième extrémité de liaison 2 comporte un pivot 5 permettant une liaison pivot d'axe 6 avec la porte d'aéronef.

Le dispositif d'ouverture d'urgence comporte un organe d'actionnement tubulaire 7 qui est commutable entre une position rétractée de repos (celle de la figure 1) et une position déployée d'ouverture correspondant à un écartement maximal des extrémités de liaison 1,2. Lors du fonctionnement normal de l'aéronef, le dispositif d'ouverture d'urgence est constamment dans sa configuration où l'organe d'actionnement tubulaire est dans sa position rétractée de repos. Ce n'est que lors d'une situation exceptionnelle nécessitant l'ouverture d'urgence de la porte d'aéronef que le dispositif d'ouverture d'urgence est déclenché et que l'organe d'actionnement tubulaire passe de sa position rétractée à sa position déployée.

L'organe d'actionnement tubulaire 7 comporte :
- une première platine d'extrémité 8 sur laquelle est fixée la première extrémité de liaison 1 ;
- une deuxième platine d'extrémité 9 située du côté de la deuxième extrémité de liaison 2.

Les platines s'étendent selon un plan radial perpendiculaire à la direction axiale, mais ne sont pas nécessairement planes sur toute leur surface.

Le dispositif d'ouverture d'urgence comporte de plus des moyens élastiques de compression qui comprennent ici un ressort tubulaire 10 qui est comprimé entre les deux platines d'extrémité 8,9. Lorsque l'organe d'actionnement tubulaire 7 est dans sa position rétractée, le ressort 10 est en position de compression maximale et emmagasine l'énergie potentielle élastique nécessaire à l'ouverture d'urgence de la porte d'aéronef. Cette énergie potentielle élastique correspond à l'énergie nécessaire pour ouvrir très rapidement une porte d'aéronef dont le poids peut-être potentiellement de l'ordre d'une centaine de kilos, et entraine un dimensionnement en conséquence du ressort de compression.

Le caractère tubulaire du ressort 10 est à interpréter au sens large : le ressort 10 peut être cylindrique ou conique, par exemple. Il peut être constitué par tout moyen tels qu'un ressort hélicoïdal, ou par un empilement de rondelles élastiques.

Selon ce premier mode de réalisation, le dispositif d'ouverture d'urgence comporte un organe de retenue de l'organe d'actionnement tubulaire 7 dans sa position rétractée, qui permet de maintenir le ressort 10 en position comprimée. Cet organe de retenue comprend ici au moins deux tiges de rétention 11 comportant chacune une tête fixe 12 s'appuyant sur la périphérie d'un orifice de la deuxième platine d'extrémité 9 recevant la tige de rétention 11.

Le dispositif d'ouverture d'urgence comporte de plus des moyens de déclenchement adaptés à libérer cet organe de retenue pour provoquer le passage de l'organe d'actionnement tubulaire 7 à sa position déployée sous l'effet de l'expansion des moyens élastiques de compression, c'est-à-dire de la détente du ressort 10. Ces moyens de déclenchement comportent une tête débrayable 13 montée sur l'extrémité de chaque tige de rétention 11, à leur extrémité opposée à la tête fixe 12. De même que les têtes fixes 12, chaque tête débrayable 13 s'appuie sur la périphérie d'un orifice de la première platine d'extrémité 8 recevant la tige de rétention 11.

Les tiges de rétention 11 peuvent être par exemple des tiges d'acier dimensionnées pour la tenue en traction nécessaire au maintien de la compression du ressort 10, entre les têtes fixes 12 en butée sur la deuxième platine d'extrémité 9 et les têtes débrayables 13 en butée sur la première platine d'extrémité 8.

Les têtes débrayables 13 peuvent être réalisées par tous moyens (mécaniques, électromécaniques, hydrauliques, pyrotechnique, par exemple), permettant de désolidariser sur commande la tête débrayable 13 de la tige de rétention 11 correspondante.

Ainsi, lorsqu'un utilisateur souhaite déclencher le dispositif d'ouverture d'urgence, il commande le débrayage des têtes débrayables 13 qui se désolidarisent de leurs tiges de rétention 11 respectives, ce qui libère l'organe de retenue et permet à l'organe d'actionnement tubulaire de passer à sa position déployée.

Selon un exemple préféré, les tiges de rétention 11 peuvent être des tiges filetées et les têtes débrayables 13 peuvent être constituées d'un écrou expansible. Les écrous expansibles sont des dispositifs électromécaniques connus qui comportent un actionneur coopérant avec un écrou articulé adapté à s'ouvrir par une commande électrique de sorte que la prise de l'écrou sur la tige filetée soit immédiatement libérée et que l'écrou devienne coulissant sur la tige de rétention 11 lors de son déclenchement.

La vue schématique de la figure 1 représente en exemple deux tiges de rétention 11. Cependant, l'organe de retenue peut comporter autant de ces tiges de rétention 11 que nécessaire, au vu notamment de la force du ressort à contenir, angulairement réparties autour du ressort 10.

Dans ce mode de réalisation, le déclenchement du dispositif d'ouverture d'urgence se fait de préférence en déclenchant de manière simultanée les moyens de déclenchement, c'est-à-dire en débrayant simultanément toutes les têtes débrayables 13.

Les tiges de rétention 11 s'étendent le long de la direction axiale 32 du dispositif d'ouverture d'urgence. Les tiges de rétention 11 constituent ici des attaches périphériques de l'organe de retenue, ces attaches périphériques étant disposées dans une position radialement externe au ressort 10.

L'organe d'actionnement tubulaire 7 bénéficie d'un guidage linéaire le long de la direction axiale 32, permettant son caractère télescopique, grâce à :
- un cylindre interne de guidage 14 fixé sur la première platine d'extrémité 8 et s'étendant selon la direction axiale 32 ;
- un cylindre externe de guidage 15 fixé sur la deuxième platine d'extrémité 9 et s'étendant également selon la direction axiale 32, coaxialement au cylindre interne de guidage 14.

Les deux cylindres de guidage 14,15 sont emboités l'un dans l'autre pour procurer une liaison glissière au mouvement d'écartement ou de rapprochement des platines d'extrémité 8,9. Dans cet exemple simple, les cylindres de guidage 14, 15 sont ajustés selon un ajustement glissant. Les cylindres de guidage 14,15 peuvent, en variante, comporter tout autre élément constituant une liaison glissière tels que bagues à faible friction, rouleaux, etc. Les cylindres de guidage 14,15 peuvent également être des cylindres à base circulaire, ou tout autre forme de base adaptée.

L'importante quantité d'énergie potentielle élastique contenue dans le dispositif d'ouverture d'urgence en position rétractée rend impératif ce guidage linéaire efficient de l'organe d'actionnement tubulaire lors de la détente du ressort 10.

Le dispositif d'ouverture d'urgence comporte de plus un régulateur d'expansion 16 qui est ici disposé à l'intérieur du ressort 10. Le régulateur d'expansion 16 est destiné à contrôler le mouvement de la porte d'aéronef et peut assurer différentes fonctions, de manière indépendante ou en combinaison.

Par exemple, le régulateur d'expansion 16 peut permettre de contrôler le mouvement d'ouverture d'urgence de la porte d'aéronef. Par exemple, sur une plage de la course d'ouverture, la porte devra atteindre la vitesse maximale d'ouverture permise par l'énergie qui lui est fournie par le ressort 10, tandis que sur d'autres plages d'ouverture, la porte devra réduire sa vitesse. Le régulateur d'expansion 16 peut notamment réduire fortement la vitesse d'ouverture en début de course d'ouverture pour faciliter l'ouverture du toboggan et en fin de course d'ouverture pour éviter les dommages que pourrait causer la porte rencontrant à pleine vitesse des butées de fin de course.

Une autre fonction possible pour le régulateur d'expansion 16 est de contrôler les mouvements d'ouverture et de fermeture de la porte durant son utilisation normale, en dehors des phases d'ouverture d'urgence. La porte d'aéronef ne nécessite ainsi pas de dispositif de débrayage, car l'ouverture et la fermeture de la porte sont possibles alors que le dispositif d'ouverture d'urgence est maintenu dans sa position rétractée. Le mouvement d'éloignement ou de rapprochement des deux extrémités de liaison 1,2 est permis par le régulateur d'expansion qui peut de plus exercer une résistance variable au mouvement de la porte.

Le régulateur d'expansion 16 peut également avoir pour fonction de motoriser le mouvement de la porte, dans le cas des portes automatiques. Le régulateur d'expansion 16 est alors piloté comme un vérin avec l'alimentation d'un fluide sous pression permettant une ouverture et une fermeture automatique de la porte, tout en maintenant le dispositif d'ouverture d'urgence en position rétractée.

L'architecture du dispositif d'ouverture d'urgence décrite ici met en œuvre ce régulateur d'expansion 16 en position centrale (au plus proche de la direction axiale 32), avec un guidage linéaire (les cylindres de guidage 14,15) disposé radialement à la périphérie du régulateur d'expansion 16, le guidage linéaire et le régulateur d'expansion 16 étant imbriqués. Le ressort 10 est également disposé radialement à la périphérie du guidage linéaire, et les moyens de rétention et de déclenchement étant finalement disposés radialement à la périphérie du ressort 10.

Cette architecture particulièrement compacte intègre toutes les fonctions combinées d'un dispositif d'ouverture d'urgence et d'un régulateur d'expansion, sous la forme d'un composant unique de type vérin, facile et rapide à monter lors de production de l'aéronef, et à changer lors de la maintenance.

Le régulateur d'expansion 16 comporte ici :
- une chambre de vérin 17 qui est délimitée par le cylindre interne de guidage 14, par la première platine d'extrémité 8 et par une paroi de fond 20 ;
- un piston 18 mobile dans la chambre 17 selon la direction axiale 32.

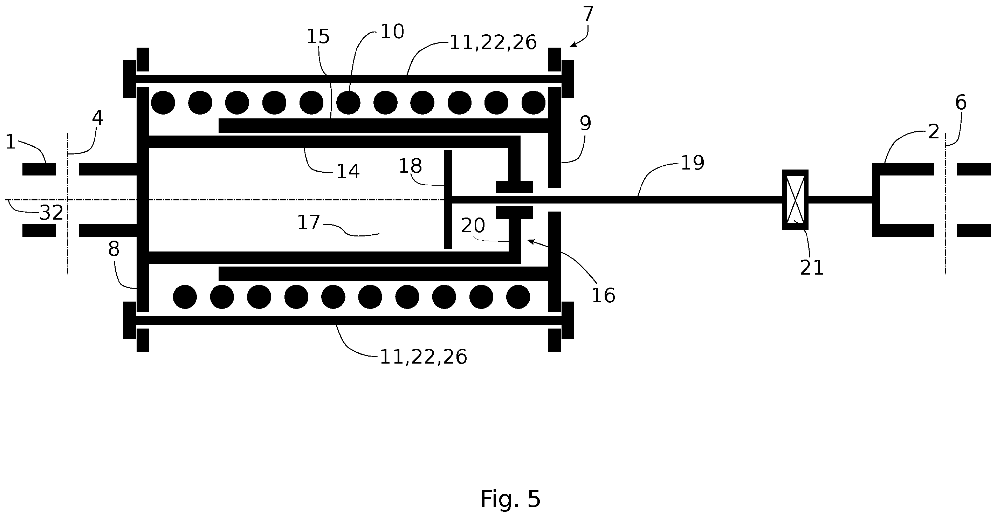

Le piston 18 est relié par une bielle 19 (fixe ou articulée) à la deuxième extrémité de liaison 2. La bielle 19 traverse la paroi de fond 20 via un joint glissant, et traverse la deuxième platine d'extrémité 9. Une butée 21 est de plus prévue sur la bielle 19 entre la deuxième platine d'extrémité 9 et la deuxième extrémité de liaison 2. Les mouvements d'ouverture et de fermeture de la porte d'aéronef sont ainsi permis, voire contrôlés ou motorisés, par le mouvement du piston 18 dans la chambre 17, tandis que le dispositif d'ouverture d'urgence est maintenu dans sa position rétractée (voir figure 5 et sa description plus loin). Lorsque le dispositif d'ouverture d'urgence est déclenché, le ressort 10 provoque l'écartement des deux platines d'extrémité 8,9 (guidées par les cylindres de guidage 14,15), la deuxième platine d'extrémité 9 entrainant dans son mouvement la butée 21 et donc la deuxième extrémité de liaison 2, ce qui provoque l'ouverture d'urgence de la porte.

La chambre 17 peut être associée si nécessaire à des conduits de fluide (non représentés) débouchant de part et d'autre du piston 18, ainsi qu'à des moyens hydrauliques de contrôle, de protection et de compensation thermique.

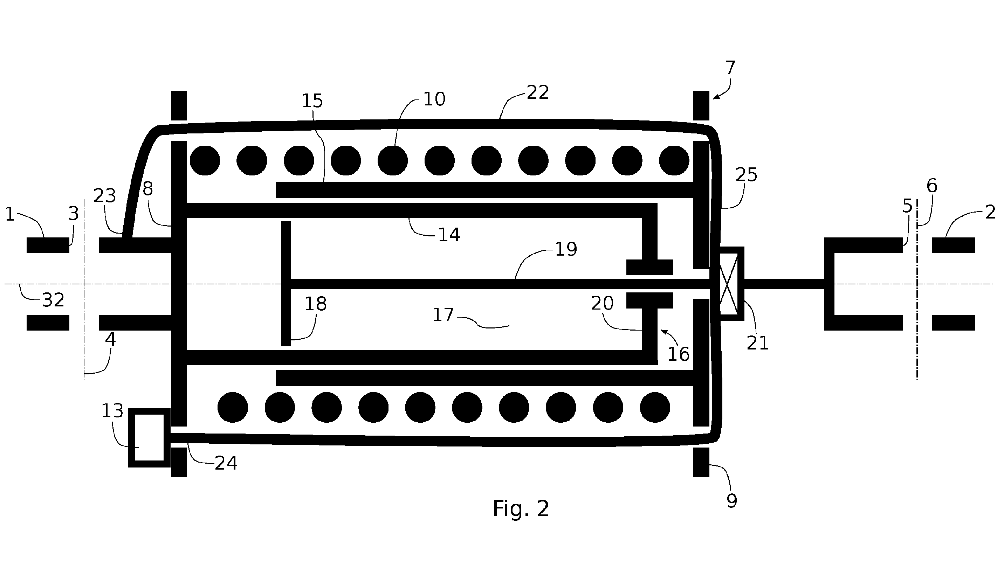

La figure 2 est une vue schématique similaire à la figure 1, illustrant un deuxième mode de réalisation du dispositif d'ouverture d'urgence.

Les éléments communs aux différents modes de réalisation portent les mêmes numéros de renvoi aux figures.

Selon ce deuxième mode de réalisation, l'organe de retenue comporte ici une seule attache périphérique constituée d'un fil de retenue 22.

Le fil de retenue 22 est constitué de tout élément filaire, ou groupe d'éléments filaires, adapté à travailler en traction pour assurer la retenue de l'organe d'actionnement en position rétractée. Le fil de retenue peut être constitué par un ou plusieurs brins, tressés ou non tressés, de fil métallique, textile, ou encore de matériau composite, ou de fibre non textile.

Le fil de retenue 22 comporte une première extrémité 23 fixée dans cet exemple à la première extrémité de liaison 1 par tout moyen approprié (vissage, serrage, sertissage, etc.), et une deuxième extrémité 24 rattachée aux moyens de déclenchements qui sont constitués ici par une tête débrayable 13. Entre ces deux extrémités, le fil de retenue 22 effectue au moins un aller-retour entre les deux platines d'extrémité 8,9. Le fil de retenue 22 traverse une première fois la première platine d'extrémité 8 jusqu'à la deuxième platine d'extrémité 9 qu'il traverse, il comporte ensuite une boucle 25 s'étendant radialement contre la deuxième platine d'extrémité 9 pour ensuite traverser à nouveau la deuxième platine d'extrémité 9 en direction de la première platine d'extrémité 8 qu'il traverse à nouveau pour rejoindre la tête débrayable 13.

Le déclenchement du dispositif d'ouverture d'urgence se fait de la même manière que dans le premier mode de réalisation, en débrayant la tête débrayable 13 de sorte que le fil de retenue 22 est libéré et peut coulisser dans les différentes ouvertures qu'il traverse au sein des platines d'extrémité 8,9, de sorte que le ressort 10 n'est plus contenu, ce qui rend possible le passage de l'organe d'actionnement tubulaire à sa position déployée.

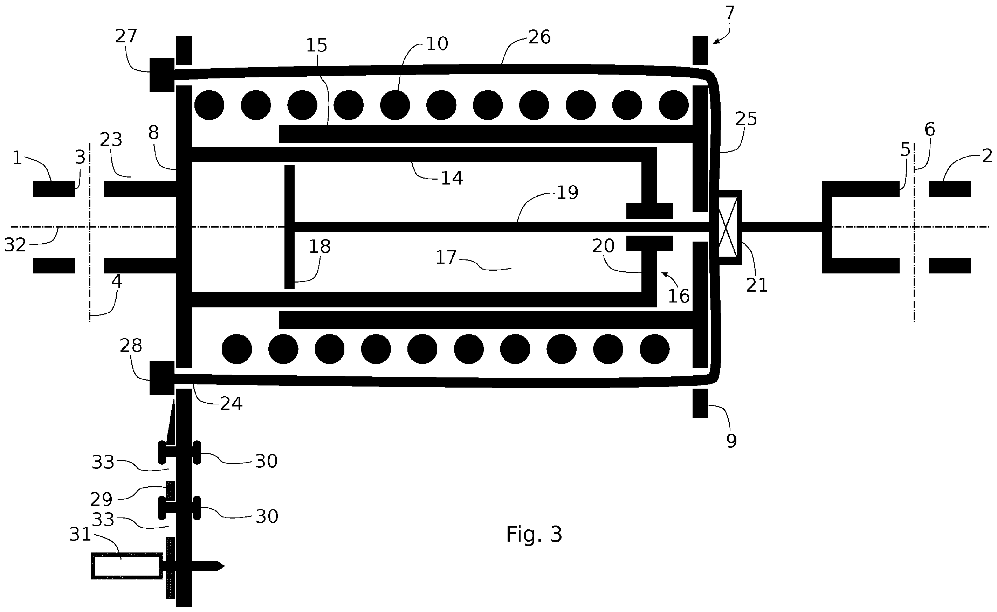

La figure 3 illustre un mode de réalisation de l'invention qui est entièrement mécanique, sans aucun recours à des câbles d'alimentation ou de commande.

Selon ce troisième mode de réalisation, l'organe de retenue comporte une attache périphérique qui est constituée par un fil de retenue 26 agencé à la périphérie radiale du ressort 10 de manière similaire au fil de retenue du deuxième mode de réalisation. Le fil de retenue 26 comporte une première tête 27 qui l'immobilise dans un orifice de la première platine d'extrémité 8 et comporte une deuxième tête 28 qui l'immobilise dans un autre orifice de la première platine extrémité 8.

Le fil de retenue 26 est ici un fil sécable et les moyens de déclenchement comportent un organe de sectionnement transversal du fil de retenue 26. Cet organe de sectionnement peut comporter tout moyen adapté à trancher le fil de retenue, tel qu'un couteau rotatif ou translaté, ou des ciseaux. Dans l'exemple illustré, l'organe de sectionnement est un couteau de sectionnement 29 mobile en translation sur deux inserts 30, et sécurisé par une goupille 31.

De préférence, le fil de retenue est conçu, dans sa structure comme dans le choix de son matériau, pour présenter une forte résistance à la traction tout en présentant une faible résistance à une opération de tranchage transversal, ce qui est le cas par exemple d'un certain nombre de cordages. Dans un mode de réalisation particulièrement avantageux, le fil de retenue 22 est constitué d'un faisceau de fibres de carbone ou d'aramide qui ont l'avantage de présenter des valeurs très élevées de rupture en traction tout en présentant une faible résistance au tranchage transversal. Le ressort 10 peut être prévu avec un très fort tarage, capable de mettre en mouvement rapidement, lors d'une opération d'ouverture d'urgence, une porte d'aéronef massive (tel que la porte d'un avion long courrier, qui sont de plus en plus complexes et de plus en plus lourdes, en plus de leur taille conséquente), tout en maintenant voire en réduisant l'effort nécessaire au déclenchement du dispositif d'ouverture d'urgence.

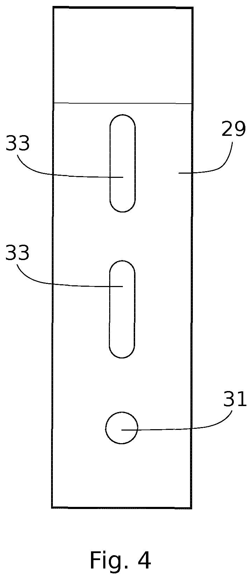

La figure 4 est une vue de face du couteau de sectionnement 29 montrant la partie supérieure tranchante et les deux trous oblongs 33 permettant son mouvement de translation.

Lorsqu'un utilisateur souhaite déclencher le système d'ouverture d'urgence, il enlève la goupille 31 puis actionne le couteau de sectionnement 29 en translation, ce qui entraine le tranchage du fil de retenue 26 et la libération du ressort 10, puis le passage de l'organe d'actionnement 7 à sa position déployée.

Pour les figures 3 et 4, la vue schématique en deux dimensions montre la butée 21 à proximité du fils de retenue 22,26, étant entendu que, dans une réalisation pratique, on veillera à ce que le trajet du fil de retenue 22, 26 n'interfère pas avec le travail de la butée 21.

La figure 5 illustre la fonction d'ouverture de service du dispositif d'ouverture d'urgence. Dans le cadre de cette fonction, le dispositif d'ouverture d'urgence est adapté à occuper des positions intermédiaires permettant l'ouverture de la porte en fonctionnement normal, sans que le dispositif d'ouverture d'urgence ne soit déclenché.

La figure 5 illustre un dispositif d'ouverture d'urgence selon l'invention, qui peut être conforme à l'un quelconque des modes de réalisation précédents. Le dispositif illustré comporte des attaches périphériques 11, 22 qui peuvent être des tiges de traction et/ou des fils de retenue sur lesquels agissent des moyens de déclenchement tels que décrits précédemment.

Selon cette fonction d'ouverture de service, le dispositif n'est pas déclenché (l'organe d'actionnement tubulaire 7 étant maintenu dans sa position rétractée) tandis que des moyens de contrôle hydrauliques permettent, voire activent, le mouvement du piston 18 dans la chambre 17. Dans cette configuration, la porte d'aéronef est libre d'être ouverte ou fermée, en bénéficiant de l'action du régulateur d'expansion 16, sans interférer avec la fonction d'ouverture de secours. Ce n'est que lors du déclenchement du dispositif d'ouverture d'urgence que l'organe d'actionnement tubulaire prendra la main grâce à la butée 21, et forcera l'ensemble vers la position déployée d'ouverture.

Des variantes de réalisation des modes décrits ici peuvent être envisagées. Par exemple, les trajets de passage des fils de retenue des modes de réalisation 2 et 3 peuvent être différents de ceux décrits ici et comporter d'autres boucles à condition que la libération du fil de retenue permette la libération du ressort 10.

Par ailleurs, les attaches des différents modes de réalisation peuvent être combinées. Par exemple, le dispositif d'ouverture d'urgence du deuxième mode de réalisation peut être complété par un organe de sectionnement comme celui du troisième mode de réalisation, pour combiner une possibilité de déclenchement commandé avec une possibilité de déclenchement manuel. Par exemple encore, les attaches périphériques peuvent être agencées comme dans le premier mode de réalisation, mais être constituées de différents fils de retenue, avec un ou des organes de sectionnement adaptés.

## Revendications

1. Dispositif d'ouverture d'urgence d'une porte d'aéronef, comprenant :
- un organe d'actionnement tubulaire (7) s'étendant selon une direction axiale (32), doté d'une première extrémité de liaison (1) et d'une deuxième extrémité de liaison (2), cet organe d'actionnement tubulaire (7) étant commutable entre une position rétractée de repos et une position déployée d'ouverture, cet organe d'actionnement tubulaire (7) comportant une première platine d'extrémité (8), située du côté de la première extrémité de liaison (1), et une deuxième platine d'extrémité (9), située du côté de la deuxième extrémité de liaison (2) ;
- des moyens élastiques de compression adaptés à solliciter l'organe d'actionnement tubulaire (7) de sa position rétractée vers sa position déployée, les moyens élastiques de compression comportant un ressort tubulaire (10) comprimé entre la première platine d'extrémité (8) et la deuxième platine d'extrémité (9) ;
- un organe de retenue de l'organe d'actionnement tubulaire dans sa position rétractée avec les moyens élastiques de compression maintenus comprimés ;
- des moyens de déclenchement adaptés à libérer l'organe de retenue et provoquer le passage de l'organe d'actionnement tubulaire à sa position déployée sous l'effet de l'expansion des moyens élastiques de compression ;
ce dispositif d'ouverture d'urgence étant **caractérisé en ce que** :
- un régulateur d'expansion (16) destiné à contrôler le mouvement de la porte est disposé à l'intérieur du ressort tubulaire (10) ;
- l'organe de retenue comporte au moins une attache périphérique reliant la première platine d'extrémité (8) à la deuxième platine d'extrémité (9), cette attache périphérique étant disposée radialement externe à la périphérie du ressort tubulaire (10).

2. Dispositif selon la revendication 1, **caractérisé en ce que** l'organe de retenue comporte une pluralité d'attaches périphériques radialement externes au ressort tubulaire (10), chacune de ces attaches périphériques comportant une tige de rétention (11).

3. Dispositif selon la revendication 2, **caractérisé en ce que** chacune des tiges de rétention (11) s'étend entre une ouverture pratiquée dans la première platine d'extrémité (8) et une ouverture pratiquée dans la deuxième platine d'extrémité (9) ; et comporte à l'une de ses extrémités une tête fixe (12), les moyens de déclenchement comportant une tête débrayable (13) à l'autre extrémité de la tige de rétention (11).

4. Dispositif selon la revendication 1, **caractérisé en ce que** l'attache périphérique comporte un fil de retenue (22,26).

5. Dispositif selon la revendication 4, **caractérisé en ce que** le fil de retenue (22,26) chemine selon au moins un aller-retour entre la première platine d'extrémité (8) et la deuxième platine d'extrémité (9).

6. Dispositif selon l'une des revendications 4 ou 5, **caractérisé en ce que** les moyens de déclenchement comportent une tête débrayable (13) fixant une extrémité du fil de retenue (22) par rapport à un orifice de l'une des platines d'extrémité.

7. Dispositif selon l'une des revendications 4 à 6, **caractérisé en ce que** les moyens de déclenchement comportent un organe de sectionnement transversal (29) du fil de retenue (26).

8. Dispositif selon l'une des revendications précédentes, **caractérisé en ce que** la première platine d'extrémité (8) comporte un cylindre interne de guidage (14) s'étendant suivant la direction axiale (32) et la deuxième platine d'extrémité (9) comporte un cylindre externe de guidage (15) s'étendant dans la direction axiale (32), le cylindre interne de guidage (14) et le cylindre externe de guidage (15) étant concentriques et emboités l'un dans l'autre selon une liaison glissière.

9. Dispositif selon la revendication 8, **caractérisé en ce que** le régulateur d'expansion (16) comporte une chambre de vérin (17) délimitée par le cylindre interne de guidage (14).

10. Dispositif selon la revendication 9, **caractérisé en ce que** le régulateur d'expansion (16) comporte un piston (18) mobile dans la chambre de vérin (17), selon la direction axiale (32).

11. Dispositif selon la revendication 10, **caractérisé en ce que** le piston (18) est relié par une bielle (19) à la deuxième extrémité de liaison (2), la bielle (19) traversant : une paroi de fond (20) du cylindre interne de guidage (14) ; et la deuxième platine d'extrémité (9).

12. Dispositif selon la revendication 11, **caractérisé en ce que** la bielle (19) comporte une butée (21) d'entrainement de la bielle (19) par la deuxième platine d'extrémité (9).

13. Dispositif selon la revendication 12, **caractérisé en ce que** la butée (21) est disposée sur portion de la bielle (19) qui est située entre la deuxième platine d'extrémité (9) et la deuxième extrémité de liaison (2).

## Patentansprüche

1. Vorrichtung zur Notöffnung einer Flugzeugtür, umfassend:
- ein sich in axialer Richtung (32) erstreckendes rohrförmiges Betätigungselement (7), versehen mit einem ersten Verbindungsende (1) und einem zweiten Verbindungsende (2), wobei dieses rohrförmige Betätigungselement (7) zwischen einer zurückgezogenen Ruhestellung und einer ausgefahrenen Öffnungsstellung umschaltbar ist, wobei dieses rohrförmige Betätigungselement (7) eine erste Endplatte (8) auf der Seite des ersten Verbindungsendes (1) und eine zweite Endplatte (9) auf der Seite des zweiten Verbindungsendes (2) aufweist;
- elastische Druckmittel, die dazu angepasst sind, das rohrförmige Betätigungselement (7) aus seiner zurückgezogenen Position in seine ausgefahrene Position zu drücken, wobei die elastischen Druckmittel eine rohrförmige Feder (10) aufweisen, die zwischen der ersten Endplatte (8) und der zweiten Endplatte (9) zusammengedrückt ist;
- ein Halteelement, das das rohrförmige Betätigungselement in seiner zurückgezogenen Position mit den elastischen Druckmitteln hält, die zusammengedrückt bleiben;
- Auslösemittel, die dazu angepasst sind, das Halteelement freizugeben und den Übergang des rohrförmigen Betätigungselements in seine ausgefahrene Position unter der Wirkung der Ausdehnung der elastischen Druckmittel zu bewirken;
wobei diese Notöffnungsvorrichtung **dadurch gekennzeichnet ist, dass**:
- ein Ausdehnungsregler (16) zum Steuern der Bewegung der Tür im Inneren der rohrförmigen Feder (10) angeordnet ist;
- das Halteelement mindestens eine Umfangsbefestigung aufweist, die die erste Endplatte (8) mit der zweiten Endplatte (9) verbindet, wobei diese Umfangsbefestigung radial außerhalb des Umfangs der rohrförmigen Feder (10) angeordnet ist.

2. Vorrichtung nach Anspruch 1, **dadurch gekennzeichnet, dass** das Halteelement eine Vielzahl von Umfangsbefestigungen radial außerhalb der rohrförmigen Feder (10) aufweist, wobei jede dieser Umfangsbefestigungen einen Haltebolzen (11) aufweist.

3. Vorrichtung nach Anspruch 2, **dadurch gekennzeichnet, dass** jeder der Haltebolzen (11) sich zwischen einer Öffnung, die in der ersten Endplatte (8) und einer Öffnung, die in der zweiten Endplatte (9) eingerichtet ist, erstreckt und an einem seiner Enden einen feststehenden Kopf (12) aufweist, wobei die Auslösemittel einen ausrückbaren Kopf (13) an dem anderen Ende des Haltebolzens (11) aufweisen.

4. Vorrichtung nach Anspruch 1, **dadurch gekennzeichnet, dass** die Umfangsbefestigung ein Halteband (22, 26) aufweist.

5. Vorrichtung nach Anspruch 4, **dadurch gekennzeichnet, dass** das Halteband (22, 26) mindestens einmal zwischen der ersten Endplatte (8) und der zweiten Endplatte (9) hin und her verläuft.

6. Vorrichtung nach einem der Ansprüche 4 oder 5, **dadurch gekennzeichnet, dass** die Auslösemittel einen ausrückbaren Kopf (13) aufweisen, der ein Ende des Haltebands (22) in Bezug auf eine Öffnung einer der Endplatten befestigt.

7. Vorrichtung nach einem der Ansprüche 4 bis 6, **dadurch gekennzeichnet, dass** die Auslösemittel ein Quertrennelement (29) für das Halteband (26) aufweisen.

8. Vorrichtung nach einem der vorhergehenden Ansprüche, **dadurch gekennzeichnet, dass** die erste Endplatte (8) eine innere Führungswalze (14) aufweist, die sich in axialer Richtung (32) erstreckt, und die zweite Endplatte (9) eine äußere Führungswalze (15) aufweist, die sich in axialer Richtung (32) erstreckt, wobei die innere Führungswalze (14) und die äußere Führungswalze (15) konzentrisch sind und ineinander in einer Gleitverbindung eingerastet sind.

9. Vorrichtung nach Anspruch 8, **dadurch gekennzeichnet, dass** der Ausdehnungsregler (16) eine Zylinderkammer (17) aufweist, die durch die innere Führungswalze (14) begrenzt ist.

10. Vorrichtung nach Anspruch 9, **dadurch gekennzeichnet, dass** der Ausdehnungsregler (16) einen Kolben (18) aufweist, der in der Zylinderkammer (17) in axialer Richtung (32) beweglich ist.

11. Vorrichtung nach Anspruch 10, **dadurch gekennzeichnet, dass** der Kolben (18) über eine Pleuelstange (19) mit dem zweiten Verbindungsende (2) verbunden ist, wobei die Pleuelstange (19) eine Bodenwand (20) der inneren Führungswalze (14) und die zweite Endplatte (9) durchquert.

12. Vorrichtung nach Anspruch 11, **dadurch gekennzeichnet, dass** die Pleuelstange (19) einen Anschlag (21) zum Mitnehmen der Pleuelstange (19) durch die zweite Endplatte (9) aufweist.

13. Vorrichtung nach Anspruch 12, **dadurch gekennzeichnet, dass** der Anschlag (21) an einem Abschnitt der Pleuelstange (19) angeordnet ist, der sich zwischen der zweiten Endplatte (9) und dem zweiten Verbindungsende (2) befindet.

## Claims

1. A device for emergency opening of an aircraft door comprising:
- a tubular actuating member ( 7 ) extending along an axial direction ( 32 ), provided with a first connecting end ( 1 ) and a second connecting end ( 2 ), the tubular actuating member ( 7 ) being switchable between a retracted rest position and a deployed opening position, the tubular actuating member ( 7 ) comprising a first end plate ( 8 ), situated towards the first connecting end ( 1 ), and a second end plate ( 9 ), situated towards the second connecting end ( 2 );
- an elastic compression device to attract the tubular actuating member ( 7 ) from the retracted rest position to the deployed opening position, the elastic compression device comprising a tubular spring ( 10 ) compressed between the first end plate ( 8 ) and the second end plate ( 9);
- a retaining member for retaining the tubular actuating member in the retracted rest position with compression of the elastic compression device maintained;
- a triggering device to liberate the retaining member and to cause the tubular actuating member to pass to the deployed opening position due to an expansion effect of the elastic compression device;
the device for emergency opening being **characterized in that**:
- an expansion regulator ( 16 ), intended to control the movement of the aircraft door, is arranged inside the tubular spring ( 10 );
- the retaining member comprises at least one peripheral attachment connecting the first end plate ( 8 ) to the second end plate ( 9 ), the peripheral attachment being radially arranged outside at the periphery of the tubular spring ( 10).

2. The device as claimed in claim 1, wherein the retaining member comprises a plurality of peripheral attachments radially outside the tubular spring ( 10 ), each one of the peripheral attachments comprising a retaining bar ( 11 ).

3. The device as claimed in claim 2, wherein each one of the retaining bars ( 11 ) extends between an opening made in the first end plate ( 8 ) and an opening made in the second end plate ( 9 ) and comprises at one end a fixed head ( 12 ), the triggering device comprising a disengageable head ( 13 ) at the other end of the retaining bar ( 11).

4. The device as claimed in claim 1, wherein the peripheral attachment comprises a retaining wire ( 22 , 26 ).

5. The device as claimed in claim 4, wherein the retaining wire ( 22 , 26 ) makes at least one return travel between the first end plate ( 8 ) and the second end plate ( 9 ).

6. The device as claimed in claim 4 or 5, wherein the triggering device comprises a disengageable head (13) fixing one end of the retaining wire ( 22 ) with respect to an orifice of one of the end plates.

7. The device as claimed in any one of claim 4 to 6, wherein the triggering device comprise a transverse member ( 29 ) for transversally severing the retaining wire ( 26 ).

8. The device as claimed in any one of the preceding claims, **characterized in that** the first end plate ( 8 ) comprises an inner guiding cylinder ( 14 ) extending along the axial direction ( 32 ) and that the second end plate ( 9 ) comprises an outer guiding cylinder ( 15 ) extending in the axial direction ( 32 ), the inner guiding cylinder ( 14 ) and the outer guiding cylinder ( 15 ) being concentric and slotted together along a sliding link.

9. The device as claimed in claim 8, wherein the expansion regulator ( 16 ) comprises a jack chamber ( 17 ) delimited by the inner guiding cylinder ( 14 ).

10. The device as claimed in claim 9, wherein the expansion regulator ( 16 ) comprises a mobile piston ( 18 ) in the jack chamber ( 17 ), oriented along the axial direction ( 32 ).

11. The device as claimed in claim 10, wherein the piston ( 18 ) is connected by a rod ( 19 ) to the second connecting end ( 2 ), the rod ( 19 ) passing through a bottom wall ( 20 ) of the inner guiding cylinder ( 14 ) and through the second end plate ( 9 ).

12. The device as claimed in claim 11, wherein the rod ( 19 ) comprises a stop ( 21 ) for driving the rod ( 19 ) through the second end plate ( 9 ).

13. The device as claimed in claim 12, wherein the stop ( 21 ) is arranged a the portion of the rod ( 19 ) that is situated between the second end plate ( 9 ) and the second connecting end ( 2 ).
